# EUROPEAN PATENT APPLICATION

(11) **EP 1 460 558 A1**
(43) Date of publication of application: **22.09.2004**
(21) Application number: 02792043.8
(22) Date of filing: 27.12.2002
(51) Int. Cl.: G06F 17/30, H04N 7/15

(54) **NETWORK INFORMATION PROCESSING SYSTEM AND INFORMATION PROCESSING METHOD**

(30) Priority: 27.12.2001 JP 2001397468
(71) Applicant: Sony Corporation, Tokyo 141-0001 (JP)
(72) Inventor: SUZUKI, Hiroyuki, Shinagawa-ku, Tokyo 141-0001 (JP); MIYAKE, Toru, Shinagawa-ku, Tokyo 141-0001 (JP); YAMAGAMI, Rui, Shinagawa-ku, Tokyo 141-0001 (JP)
(74) Representative: DeVile, Jonathan Mark, Dr.
(86) International application number: PCT/JP2002/013743
(87) International publication number: WO 2003/056459

(57) **Abstract**

As shown in FIG. 3, a network electronic conference system comprises: at least one notebook personal computer PC1 through PCi each having an input operation function to process arbitrary information; presentation apparatus 10 for displaying image based on information transferred from the notebook personal computer PC1; a creator (5) for storing information contents DIN displayed on the presentation apparatus 10 together with their time information TD and creating electronic information DOUT; and a communication cable 40 and a access point 6, which connect at least the notebook personal computer PCi, communicator 10, and the creator 5 to each other. The apparatus 10 controls the creator 5 so that it can store the mark information CD obtained on the basis of an input operation function of the notebook personal computer PCi together with the time information TD. This configuration allows the contents to easily be created without any complicated editing operation.

## Description

### TECHNICAL FIELD

The present invention relates to a network-information-processing system and an information-processing method that are well applicable to a network electronic conference system, a network education system, a network game system, etc.

More particularly, it relates to the ones wherein a notebook type personal computer (hereinafter referred to as " notebook personal computer"), a presentation apparatus such as a communicator and a data projector (hereinafter referred to as "projector" simply), and an information-creating apparatus are connected to each other through communication cable or access point(s), thereby storing mark information obtained on the basis of input operation function of the notebook personal computer together with its time information, classifying streaming data stored with the time information into arbitrary split information contents, and replacing reproducing order of the split information contents with another or deleting unnecessary split information contents from reproducing items.

### BACKGROUND ART

Recently, a so-called electronic conference system has been often employed by which a presenter (a person who makes a presentation of materials) brings into a conference room the presentation materials created using a personal computer and presents the materials to a plurality of other conference attendees using an electronic apparatus. In this electronic conference system, a display device and a notebook personal computer of the presenter of materials are connected to each other. As this display device, a data projector is used so that presentation materials created by a personal computer may be displayed. To the data projector, a notebook personal computer of one presenter is connected through an RGB-color signal cable, so that a screen being displayed on this notebook personal computer is projected to a white wall etc. Any presentation materials projected on the white wall etc. are pointed by a mouse cursor operated by the presenter. That is, only the materials owned by a presenter are displayed on the white wall etc.

Recently, such a data projector as to accommodate networks is available. This projector has built-in personal computer function. By using such the projector, the presenter himself or herself transfers a presentation file from his or her notebook personal computer (hereinafter referred to as "information-processing apparatus" also) via a network to a projector so that the projector may display and project the contents thereof utilizing the personal computer function of this projector.

However, in the conventional electronic conference system, if such a system is organized that presentation materials are displayed on multiple projectors to proceed the presentation, thereby automatically creating the contents such as records of conference from the presentation materials, such the system has the following problems:
① If creating the contents such as the records of conference and editing streaming data using a personal computer, it requires a large amount of time to perform format conversion in addition to an editing-operation of the streaming data and to couple the cut streaming data thus edited. This results in increasing the number of process of editing-operation therefor;
② If streaming data remained after editing-operation by the personal computer is cancelled or streaming data is treated without adding any identification information etc., it is necessary to get down to an operation such that the streaming data is confirmed all over again when the contents are created in another form, so that a possibility occurs that the editing-operation is too hard.

### DISCLOSURE OF THE INVENTION

A network-information-processing system related to the present invention comprises at least one information-processing apparatus having an input operation function to process arbitrary information, information-controlling-and-displaying means for displaying an image based on information transferred from the information-processing apparatus, information-creating apparatus for storing information contents displayed on the information-controlling-and-displaying means together with their time information to create electronic information contents, and communication means for connecting at least the information-processing apparatus, the information-controlling-and-displaying means, and the information-creating apparatus. The information-controlling-and-displaying means controls the information-creating apparatus to store control information obtained on the basis of the input operation function of the information-processing apparatus together with the time information.

According to this network-information-processing system of this invention, the information-processing apparatus, the information-controlling-and-displaying means, and the information-creating apparatus are connected to each other through the communication means, so that the information-processing apparatus can process arbitrary information based on its input operation function. The information-controlling-and-displaying means displays the image based on information transferred from the information-processing apparatus. The information-creating apparatus stores information contents displayed on the information-controlling-and-displaying means together with their time information to create the electronic information contents. Assuming this, the information-controlling-and-displaying means controls the information-creating apparatus so that it can store the control information obtained on the basis of the input operation function of the information-processing apparatus together with their time information. Thus, the displayed information contents stored with the time information are classified into the arbitrary split information contents according to the control information, thereby allowing a plurality of the split information contents thus classified according to the control information to be subject to an editing process such as replacing the reproducing order thereof with another based on the time information or deleting the unnecessary split information contents from reproducing items. This permits the electronic information contents to be easily created without carrying out any complicated editing-operations.

In an information-processing method related to the present invention, at least one information-processing system having an input operation function to process arbitrary information, an information-controlling-and-displaying system for displaying an image based on information transferred from the information-processing system, and an information-creating system for storing information contents displayed on the information-controlling-and-displaying system together with their time information to create electronic information contents are connected to each other through communication means. Control information obtained on the basis of the input operation function of the information-processing system is stored with the time information.

According to the information-processing method of this invention, the displayed information contents stored with their time information are classified into the arbitrary split information contents according to the control information, so that a plurality of the split information contents thus classified according to the control information can be subject to the editing process such as replacing the reproducing order thereof with another based on the time information or deleting the unnecessary split information contents from reproducing items. This permits the electronic information contents to be easily created without carrying out any complicated editing-operations.

### BRIEF DESCRIPTION OF THE DRAWINGS

FIG. 1 is a block diagram for showing a configuration of a first embodiment of a network-information-processing system 100 according to the present invention;
FIG. 2 is a flowchart for showing a processing example in the network-information-processing system 100;
FIG. 3 is a diagram for showing a configuration of a second embodiment of a network electronic conference system 101 according to the present invention;
FIG. 4 is a block diagram for showing an internal configuration of a communicator 3;
FIG. 5 is a block diagram for showing an internal configuration of a creator 5;
FIG. 6 is a diagram for showing a display example of a GUI screen 50 at a client PC for a recorder;
FIG. 7 is a diagram for showing a display example of a menu screen PO in the GUI screen 50;
FIG. 8 is a diagram for showing a display example of a contents-manager screen 50e in the menu screen PO shown in FIG. 7;
FIG. 9 is a diagram for showing a display example of a confirmation screen PI for recording and saving;
FIG. 10 is a diagram for showing a display example in a contents-editing screen 70 relative to contents-editing software;
FIG. 11 is a diagram for showing a display example of a mark-list-editing screen P2;
FIG. 12 is a diagram for showing a display example of a contents-reproducing screen 60;
FIG. 13 is a flowchart for showing a system-processing example at the network electronic conference system 101;
FIG. 14 is a flowchart (subroutine) for showing a processing example in recording the displayed information contents; and
FIG. 15 is a flowchart (subroutine) for showing a processing example in reproducing the displayed information contents.

### BEST MODE FOR CARRYING OUT THE INVENTION

The present invention has solved the conventional problems and, it is an object of the present invention to provide a network-information-processing system and an information-processing method that enable electronic information contents to be easily created without any complicated editing operations.

The following will describe an embodiment of each of the network-information-processing system and the information-processing method related to the present invention with reference to drawings.

### (1) First Embodiment:

The present embodiment is a highest conception of the network information-processing system, in which an information-processing apparatus, information-controlling-and-displaying means, an information-creating apparatus are connected to each other through communication means, so that the information-creating apparatus is controlled to store control information obtained on the basis of input operation function of the information-processing apparatus together its time information, thereby allowing displayed information contents stored with the time information thereof to be classified into arbitrary split information contents and to be carried out editing operation such as replacement of reproducing order of the split information contents and a deletion of unnecessary split information contents from reproducing items.

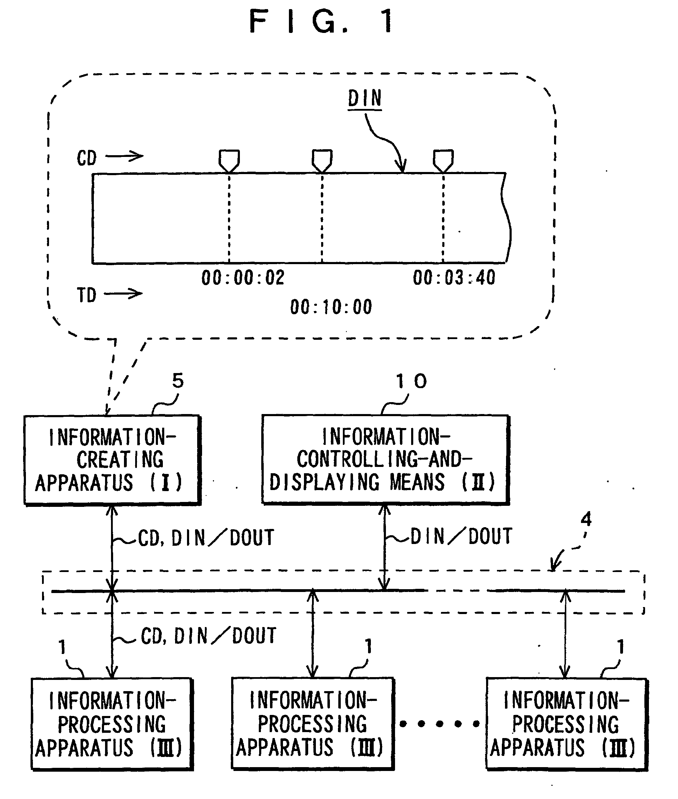

A network-information-processing system 100 shown in FIG. 1 is well applicable to a network electronic conference system, a network education system, a network game system, etc. In this system 100, information-creating apparatus 5 (Information-creating system I) and at least one information-controlling-and-displaying means 10 (Information-controlling-and-displaying system II) are arranged in a specific region or a specific place such as a conference room, and at least one information-processing apparatus 1 (Information-processing system III) is prepared in this specific region or place.

This information-creating apparatus 5, the information-controlling-and-displaying means 10, and each information-processing apparatus 1 are connected to one another through communication means 4, so that the information-controlling-and-displaying means 10 can be remote-controlled on the basis of operational instruction from any information-processing apparatus 1 and the information-creating apparatus 5 can store and edit displayed information contents DIN and create electronic information DOUT. A subject of such the displayed information contents DIN are illustratively motion image by shooting a situation on a conference, audio information by collecting sound from attendees of the conference, and still image information based on the presentation materials that the presenter of materials has prepared.

The information-processing apparatus 1 has a graphic user interface (hereinafter referred to as "GUI function"), which is one example of the input operation function, to process arbitrary information utilizing this GUI function and a mouse operation function. As the information-processing apparatus 1, a notebook-typed personal computer (hereinafter referred to as "notebook personal computer"), which is easy to carry about, is used. Of course, not only a notebook personal computer but also a desktop type personal computer may be used. If attending in a network electronic conference system or the like, special application therefor is installed in the notebook personal computer.

The communication means 4 is connected to the information-controlling-and-displaying means 10, thereby enabling an image to be displayed based on information transferred from the information-processing apparatus 1. As the information-controlling-and-displaying means 10, a combination of a discrete projector and a discrete communicator having personal computer functions is used. Of course, the present invention is not limited to this, and thus, a combination of a network-type projector having personal computer functions and a communicator may be used. The information-controlling-and-displaying means 10 assists electronic information processing including a control of the information-creating apparatus 5 based on remote-controlled instruction from the information-processing apparatus 1.

For example, the information-controlling-and-displaying means 10 controls the information-creating apparatus 5 so that it can store control information CD obtained on the basis of the GUI function of the information-processing apparatus 1 together with its time information TD. This control information CD is identification information for setting a mark corresponding to the displayed information contents DIN. The mark is set so that the displayed information contents DIN may be classified into arbitrary split information contents. Such the split information contents are displayed on a thumbnail (reduced image) for still image or the like, thereby enabling editing process of the electronic information contents DOUT or the like to be made easy.

In this system 100, the control information CD is set corresponding to the displayed information contents DIN to be stored in the information-creating apparatus 5 using the GUI function of the information-processing apparatus 1. The control information CD may be set corresponding to the displayed information contents DIN regularly or irregularly. If the control information CD is irregularly set, it is possible to edit specific displayed information contents DIN at random, thereby classifying it into the split information contents at random. Thus, the split information contents can be reproduced at random by a set unit of the control information CD.

In the information-creating apparatus 5 connected through the above communication means 4, the displayed information contents DIN, which is displayed on the information-controlling-and-displaying means 10, are stored together with their time information TD and the electronic information contents are created. The information-creating apparatus 5 also stores the number of mark and title relating to the control information CD in a memory. Time when a marker is specified and the control information CD is set is managed as the time information TD, and listed in display screen of the information-processing apparatus 1 or the like. In this embodiment, acquiring the control information CD and the time information TD allows the editing process therefor to be easily performed.

In this system 100, the information-creating apparatus 5 classifies the displayed information contents DIN into arbitrary split information contents based on the control information CD. Such the split information contents are split according to the control information CD and the time information TD. This is because a reproducing order of the split information contents may be replaced or unnecessary split information contents may be deleted from reproducing items. For example, a marker is previously specified with the corresponding displayed information contents DIN being set to the time information TD and the control information CD in storing, and the corresponding split information contents are reproduced by drifting into a marker position previously specified on the basis of the control information CD in reproducing.

In this system 100, the displayed information contents are downloaded from the information-creating apparatus 5 to any information-processing apparatus 1, and the information-processing apparatus 1 reproduces the displayed information contents. In the displayed information contents, reproducing order of the split information contents is set using the GUI function of the information-processing apparatus 1. The information-processing apparatus 1 edits the split information contents using the GUI function thereof so that based on the split information contents thus edited, the information-creating apparatus 5 creates the electronic information contents DOUT. The information-creating apparatus 5 automatically extracts the split information contents from the information contents DIN according to a first time when a first marker is specified and first control information is set, a second time when a second marker is specified and second control information is set, ..., and n-th time when a n-th marker is specified and n-th control information is set, respectively, and edits them.

For example, if the split information contents between the first time when the first marker is set and the second time when the second marker is set are unnecessary for creating the contents, they are not extracted so that they remain in database or the like. Such editing is performed that the split information contents between the second time when the second marker is set and a third time when a third marker is set are replaced with the split information contents between the third time when the third marker is set and a fourth time when a fourth marker is set. Thus, the split information contents are automatically extracted from the displayed information contents DIN based on the control information CD according to the markers previously specified, so that editing process may be made easy.

In this embodiment, editing software of the information-creating apparatus 5 creates the electronic information contents DOUT. For example, a plurality of the split information contents that a personal computer of a client, of a clerk or the like specifies, edits, deletes and selects as described above, takes the order in consideration is secured for data-stream to become the electronic information contents DOUT.

Thus, a network electronic conference system and the like wherein the split information contents with their set control information CD are automatically extracted from a plurality of presentation screens and sent out in sequence may be organized. This allows the electronic information DOUT of data stream form to be distributed (broadcast) in unison to the information-processing apparatus 1 and the information-controlling-and displaying means 10, etc. that are arranged at other places such as remote sites.

Although the information-processing apparatuses 1, the information-controlling-and-displaying means 10, and the information-creating apparatus 5 are connected to each other through the communication means 4, it is assumed in the system 100 that the information-controlling-and-displaying means 10 is provided with wireless communication function and each of the information-processing apparatuses 1 is also provided with wireless communication function, thereby composing the communication means 4; that wireless equipment is provided as an access point, thereby composing the communication means 4; and that normal communication cables are used, thereby composing the communication means 4. Of course, a combination of these items allows a network to be built. As the one having the wireless communication function, a wireless LAN card is used. If the wireless LAN card is used, the information-controlling-and-displaying means 10 and each of the information-processing apparatuses 1 can be connected to each other through a Peer-to-Peer mood within a specific region or place. In this case, an access point is unnecessary.

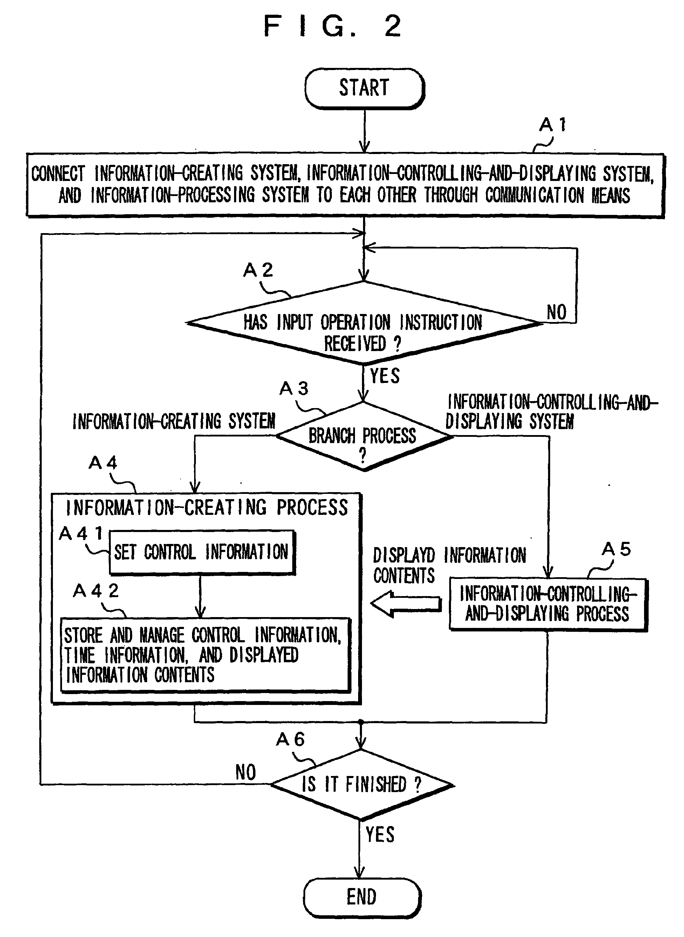

The following will describe a processing example in the network-information-processing system concerning an information-processing method according to the present invention. FIG. 2 is a flowchart for showing a processing example in the network-information-processing system.

This embodiment assumes a case where the information-creating apparatus 5 (an information-creating system I) and at least one information-controlling-and-displaying means 10 (an information-controlling-and-displaying system II) are arranged within a specific region or a specific place such as a conference room, and at least one information-processing apparatus 1 (an information-processing system III) is prepared within the specific region or the specific place. As the information-processing apparatus 1, a notebook-typed personal computer (hereinafter referred to as "notebook personal computer"), which is easy to carry about, is used. Of course, not only a notebook personal computer but also a desktop type personal computer may be used. If attending in a network electronic conference system or the like, special application therefor is installed in the notebook personal computer.

According to these processing requirements, at Step A1 in the flowchart as shown in FIG. 2, the information-creating system I, the information-controlling-and-displaying system II, and the information-processing system III are connected to each other through the communication means 4. In this time, for example, the information-controlling-and-displaying means 10 is provided with wireless communication function and each of the information-processing apparatus 1 is also provided with wireless communication function, thereby composing the communication means 4. The information-creating apparatus 5 and the information-controlling-and-displaying means 10 are connected using the communication cable. As the information-controlling-and-displaying means 10, a combination of a discrete projector and a discrete communicator having personal computer functions is used. Of course, the present invention is not limited to this, a combination of a network-type projector and a communicator having personal computer functions may be used. The information-controlling-and-displaying means 10 assists electronic information processing including a control of the information-creating apparatus 5 based on remote-controlled instruction from the information-processing apparatus 1.

Of course, wireless equipment may be provided as an access point, thereby composing the communication means 4 and normal communication cables may be used, thereby composing the communication means 4. Electronic equipment for network configuration such as the information-processing apparatuses 1, the information-creating apparatus 5, and the information-controlling-and-displaying means 10 is powered on.

Then, at any information-processing apparatuses 1, an attendee in the system runs a system program for information processing, the process goes to Step A2 where the information-controlling-and-displaying means 10 waits for an input operation instruction from any information-processing apparatuses 1. According to the input operation instruction, the information-controlling-and-displaying means 10 checks whether the displayed information contents DIN are stored in the information-creating apparatus 5.

In this time, storing instruction is issued to the corresponding information-controlling-and-displaying means 10 using GUI function of the information-processing apparatus 1. If the information-processing apparatus 1 issues to the information-controlling-and-displaying means 10 input operation instruction, storing instruction or the like, the process goes to Step A3 where the information processing is branched in the corresponding system 100. Of course, the invention is not limited to this, and thus, input operation instruction, storing instruction or the like, which is input by operating an operation screen (Web screen) of the information-processing apparatus 1 of a client, may be informed directly to the information-creating apparatus 5.

In information-creating system I, the process goes to Step A4 where the information-creating process is performed. For example, at Step A41, the control information CD is set based on the GUI function of the information-processing system III. The control information CD is set corresponding to the displayed information contents DIN regularly or irregularly. If the control information CD is irregularly set, it is possible to edit the specific displayed information contents DIN at random, thereby classifying it into the split information contents at random. Thus, the split information contents can be reproduced at random by a set unit of the control information CD.

Then, in the information-creating system I, at Step A42, the control information CD is stored together with the time information TD and the displayed information contents DIN. Of course, in the information-creating apparatus 5, the displayed information contents DIN, which is displayed on the information-controlling-and-displaying means 10, motion image/audio information, which is not shown, and the like are stored together with their time information TD to create the electronic information contents DOUT.

For example, in the information-creating apparatus 5, the displayed information contents DIN is classified into arbitrary split information contents based on the control information CD. Such the split information contents are split according to the control information CD and the time information TD. This is because a reproducing order of the split information contents may be replaced or unnecessary split information contents may be deleted from reproducing items. Thus, a marker is previously specified with the corresponding displayed information contents DIN being set to the time information TD and the control information TD in storing, and the corresponding split information contents are reproduced by drifting into a marker position previously specified on the basis of the control information CD in reproducing.

In the information-creating system I, the split information contents are edited using the GUI function thereof and in the information-creating apparatus 5, the electronic information contents DOUT are created on the basis of the split information contents thus edited. The information-creating apparatus 5 automatically extracts the split information contents from the information contents DIN according to a first time when a first marker is specified and first control information is set, a second time when a second marker is specified and second control information is set, ..., and n-th time when a n-th marker is specified and n-th control information is set, respectively, and edits them. The process goes to Step A6.

Alternatively, in the information-controlling-and-displaying system II, at Step A5, the information-controlling-and-displaying process is performed. For example, the information-controlling-and-displaying means 10 displays the still image or the like based on information on the presentation materials and the like transferred from the information-processing apparatus 1. The information contents DIN are transferred to the information-creating apparatus 5. In this time, the displayed information contents are downloaded from the information-creating apparatus 5 to the information-processing apparatus 1, and the information-processing apparatus 1 reproduces the displayed information contents DIN. In the displayed information contents DIN, reproducing order of the split information contents is set using the GUI function of the information-processing apparatus 1.

Further, at Step A6, according to final decision of attendees in the system, remote-control of the information-controlling-and-displaying means 10 and the information-creating apparatus 5 by means of the information-processing apparatus 1 is finished. In the information-controlling-and-displaying means 10, power-off information is detected and the information processing is finished thereby. If the remote control is not finished, the process goes back to Step A2 and the above steps A2 through A5 are repeated.

Thus, according to the network-information-processing system 100 as the embodiment relative to the present invention, the information-processing apparatuses 1, the information-creating apparatus 5, and the information-controlling-and-displaying means 10 are connected to each other through the communication means 4, so that the information-processing apparatus 1 can perform arbitrary information processing based on the GUI function thereof. On assumption of this, the information-controlling-and-displaying means 10 controls the information-creating apparatus 5 so that it can store the control information CD obtained on the basis of the GUI function of the information-processing apparatus 1 together with the time information thereof. Alternatively, storing instruction or the like, which is input by operating the operation screen (Web screen) of the information-processing apparatus 1 of a client, is informed directly to the information-creating apparatus 5. Therefore, the displayed information contents DIN stored with the time information TD thereof can be classified into arbitrary split information contents according to the control information CD so that the editing process wherein a reproducing order of a plurality of the split information contents classified according to the control information CD may be replaced on the basis of the time information TD or unnecessary split information contents may be deleted from the reproduced items can be performed. This allows the electronic information contents DOUT to be easily created without any complicated editing operations. Thus, the network-information-processing system 100 is well applicable to a network electronic conference system, a network education system, a network game system and the like.

### (2) Second Embodiment:

In the present embodiment, a network electronic conference system 101, which is one example of network-information-processing systems, is organized so that the information-controlling-and-displaying means controls the information-creating apparatus so that it can store the control information CD obtained on the basis of the GUI function of the information-processing apparatus together with its time information TD.

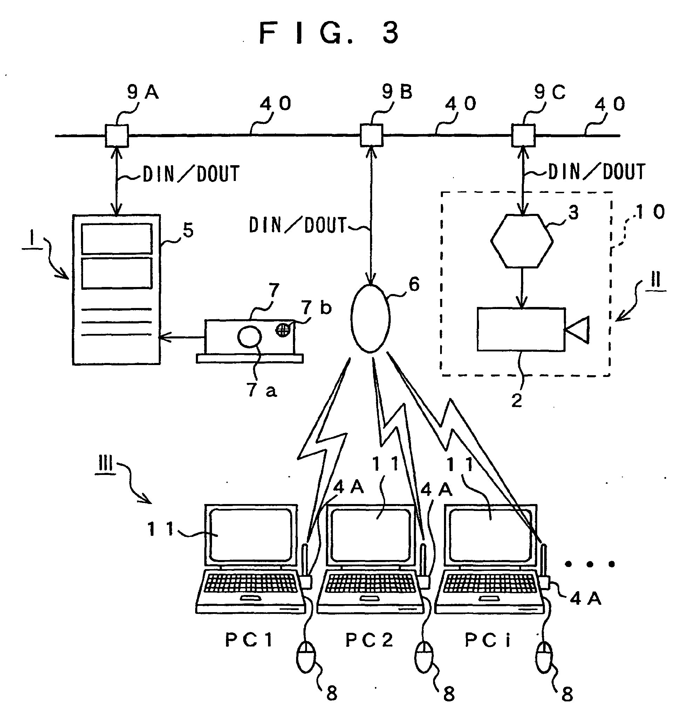

The network electronic conference system 101 as shown in FIG. 3 is a presentation system utilizing a network in which a creator 5 (information-creating system I) , which is an example of the information-creating apparatus, and a presentation apparatus 10 (information-controlling-and-displaying system II), which is an example of the information-controlling-and-displaying means, are arranged in one conference room or the like as well as plural notebook personal computers PCi (i=1 to n: information-processing system III), each of which is an example of the information-processing apparatus, are prepared in the conference room. These creator 5 and presentation apparatus 10 are connected to each other through centralized connectors (hereinafter also referred to as HUBs) 9A, 9B, and 9C, communication cables 40 constituting a wired LAN, and the like, each of which is an example of the communication means. HUBs 9A, 9B, and 9C are connected to each of the communication cables 40.

This presentation apparatus 10 and each of the notebook personal computers PCi are connected to each other through an access point 6 and a wireless LAN, each of which is an example of the communication means, so that the presentation apparatus 10 can be remote-controlled based on operation instructions from any notebook personal computers PCi. In other words, an access by connecting the notebook personal computers PCi to the presentation apparatus 10 via the network allows the network electronic conference system 101 to be organized. This network electronic conference system 101 may operate solely or be used with it being remote-connected with another same system.

In the system 101, conference attendee(s) use(s) the notebook personal computer(s) PCi that can be connected to the network. Each of the notebook personal computers PCi has GUI function so that they can perform arbitrary information processing utilizing this GUI function and a mouse operation function. Each of the notebook personal computers PCi is provided with a liquid crystal display 11 on which an operation screen such as a GUI screen is displayed. If participating in the network electronic conference system 101, a special application is installed to each of the notebook personal computers PCi. Although the presentation apparatus 10 is prepared in this system 101, the presentation apparatus 10 is composed of a projector 2 for projecting the presentation materials, a communicator 3 incorporating a personal computer function, and the like. Of course, as the projector 2 in the presentation apparatus 10, a network-corresponding typed display device with a built-in communication function may be used.

In this embodiment, the HUB 9C is connected to the communicator 3 that controls image display for presentation based on information of materials transferred from any notebook personal computers PCi. In other words, the communicator 3 assists information processing in the network information processing that includes input/output control to/from the projector 2 and the creator 5 based on the remote-control instructions from any notebook personal computers PCi.

For example, the communicator 3 controls the creator 5 so that it can store mark information CD, which is one example of the control information, obtained on the basis of the GUI function of any notebook personal computers PCi together with its time information TD. Alternatively, the communicator 3 directly informs the creator 5 of the mark information CD and the like, which is input by operating an operation screen (Web screen) of the notebook personal computer PCi of a client.

This mark information CD is identification information for setting a mark corresponding to the displayed information contents DIN. The mark is set to classify the displayed information contents DIN into arbitrary split information contents. It is also set to make easy the editing process of the electronic information contents DOUT etc. Further, the communicator 3 administrates the notebook personal computer(s) PCi that are used by the conference attendee(s).

The communicator 3 is connected with the projector 2 by which an image for presentation is displayed based on information for materials transferred from any notebook personal computers PCi. The projector 2 projects a color image on white wall or the like based on RGB signal. Instead of the projector 2, a flat panel display or the like may be used. As the flat panel display, plasma display or the like that is capable of being made large-scale display screen.

In this embodiment, television conference apparatus 7 (for example, SONY-made PCS-1600) that can be controlled via LAN connection is provided as an example of motion image/audio input apparatus, and obtains at least motion image and audio information within the conference room other than the material information transferred from the notebook personal computers PCi. The television conference apparatus 7 has a video camera 7a and a microphone 7b as the audio input apparatus. In this embodiment, the television conference apparatus 7 directly connects the creator 5, and has such a configuration that its operation mode can be controlled according to instructions from the notebook personal computers PCi of a client.

The creator 5 connects the above HUB 9A and the television conference apparatus 7 and stores the displayed information contents DIN that is displayed using the projector 2 and motion image and audio information obtained by the television conference apparatus 7 together with the time information TD thereof to create the electronic information contents DOUT. The creator 5 stores the number of Marker and a title relative to the mark information CD, which is one example of the control information. Time when the marker is specified and the mark information CD is set is managed according to the time information TD.

For example, the notebook personal computers PCi check whether a mark key is pressed every set period of time. User is required to set marks every turning point such that topics change and the presenters change in the course of their storing using the mark key in a control screen of any notebook personal computers PCi. If the mark key is pressed within a set period of time in any notebook personal computers PCi, the creator 5 stores in its mark list the numbers of the marks 1, 2, ... and their marked time, 00:00:01, or the like. For example, the Mark list is stored in a memory incorporated in the creator 5 and is developed therefrom.

The creator 5 lists the numbers of marks and their time based on the displayed information contents DIN transferred from the communicator 3 and the mark information CD transferred from any notebook personal computers PCi, and manages them. For example, in a case of the network electronic conference system, Mark data such as the number of mark, 1; marked time, 00:00:02; and title of the mark, opening declaration as an original thereof is listed in the Mark list and then, the list is displayed on the display devices of the notebook personal computers PCi. It is the aim of making the editing process therefor easy to display the number of mark, the marked time, and the title of the mark by a list.

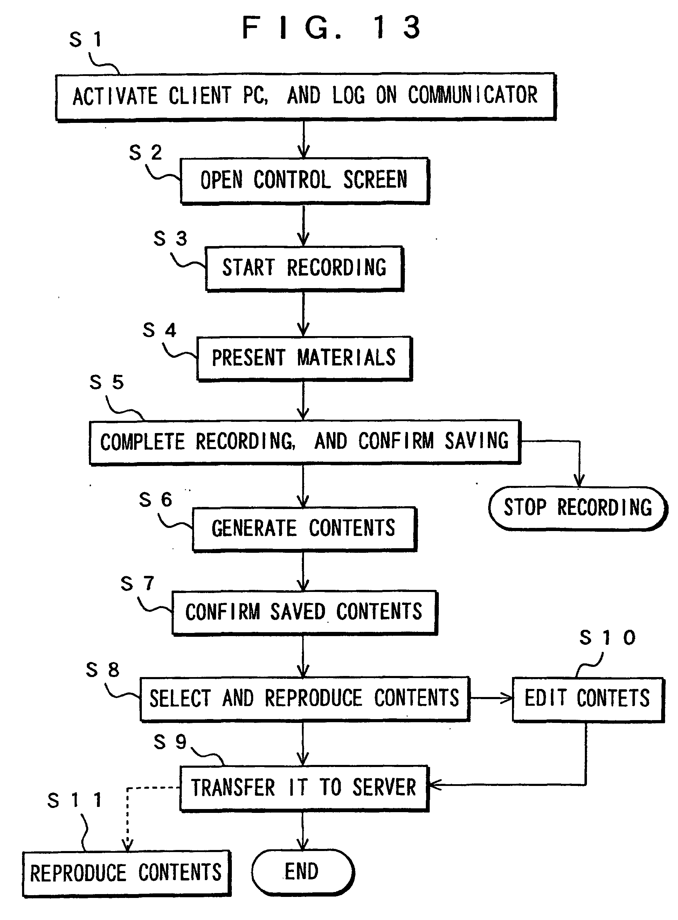

Herein, a term, "original" means contents of a state where the split information contents have not been replaced, namely, the reproducing order thereof has not been replaced. To "original", "recommendation" is prepared. The term, "recommendation" means a state in Mark list after the split information contents have been replaced, namely, the editing has been performed. In a case of "recommendation", contents of which the reproducing order has been replaced are displayed. The split information contents thus edited are stored in a memory of the creator 5 and managed. The electronic information contents DOUT are the ones obtained by combining the split information contents thus edited by data stream form to group them. A specific example thereof will be described later in accordance with FIG. 13.

The displayed information contents DIN is information for still image based on the presentation materials, which are prepared by the presenter of materials; image information has contents for motion image obtained by shooting a situation of the conference; and audio information is voice contents obtained by recording it from the attendee of the conference. The information for still image, the contents for motion image, and the audio information are used for recording the contents of electronic conference as a record of proceedings and saving them. The creator 5 edits the displayed information contents DIN to secure it in data stream, thereby creating the electronic information DOUT. It is the aim of delivering the record of proceedings via a network to secure the electronic information DOUT in data stream.

How to set the mark information CD corresponding to the displayed information contents DIN to be stored in the creator 5 using the GUI function of any notebook personal computers PCi in this system 101 has been described beforehand. The mark information CD may be set to the displayed information contents DIN regularly or irregularly. For example, in order to make easy the editing process of specific presentation materials etc. such as examination question, the marker information CD is set irregularly. Thus, the specific presentation materials may be edited at random and classified into the presentation materials at random. As a result thereof, the presentation materials are reproduced by a set unit of the marker information CD at random, so that the presentation materials or the like thus reproduced can be used as the examination question. Such the random sampling makes impartial an inclination to set the examination questions so that an order of set questions can be changed every time they are seen.

In this system 101, the creator 5 classifies the displayed information contents DIN into arbitrary split information contents based on the mark information CD. The split information contents that are split according to the mark information CD are managed according to the time information TD. It is the aim of replacing reproducing order of the split information contents or deleting unnecessary split information contents from the reproducing items to manage the split information contents according to the time information TD.

In this system 101, the split information contents are downloaded from the creator 5 to any notebook personal computers PCi wherein the split information contents are reproduced. The reproducing order of the split information contents is set using the GUI function of any notebook personal computers PCi. For example, a mark is set every turning point using the mark key in a control screen of any notebook personal computers PCi, which has been described beforehand. Thus, if the displayed information contents DIN are made to the streaming data, a marker is previously specified and the streaming data is then set to the mark information CD in storing, so that the corresponding streaming data may be reproduced by drifting into a marker position previously specified on the basis of the mark information CD in reproducing.

In this embodiment, if the streaming data is reproduced using the marker, the reproduction is performed so that reproducing order is previously specified by a marker unit, and the reproducing order of the streaming data is replaced, or unnecessary part of the streaming data is deleted. Further, setting the reproducing order of the streaming data at random allows the streaming data to be reproduced by marker unit at random. A case where the marker is set (marked) manually or a case where the marker is set every period of time is taken. This is because if an interval between the markers is short, an accuracy of reproduction thereof is increased.

The notebook personal computers PCi edit the split information contents using the GUI function thereof and based on the split information contents thus edited, the creator 5 creates the electronic information contents DOUT. In other words, the creator 5 automatically extracts the split information contents from the displayed information contents DIN based on the mark information CD and edits them. For example, the creator 5 lists the numbers of marks and time thereof based on the displayed information contents DIN transferred from the communicator 3 and the mark information CD transferred from any notebook personal computers PCi and manages them. In this embodiment, MARK data such as the number of mark, 1; marked time, 00:00:02; and title of the mark, opening declaration as an original thereof is listed in a Mark list and then, the list is displayed on the display devices of any notebook personal computers PCi or the like.

Herein, a user as a clerk or the like may edit the displayed information contents DIN in a state where the split information contents are not replaced so as to be maintained as original in the record of proceedings in the electronic conference, namely, a case where the reproducing order is not replaced, and in a state where the split information contents are replaced according to the recommendation of the record of proceedings, namely, a case where the reproducing order is replaced. The split information contents thus edited are stored in a memory of the creator 5 and managed. The electronic information contents DOUT are the ones obtained by combining the split information contents thus edited by data stream form to group them. Of course, the invention is not limited to this, and thus, the ones such that only the reproducing order is replaced, without compressing all the data, at that, may be saved in the memory.

Thus, organized may be a network electronic conference system or the like wherein plural projectors 2 are arranged in one conference room and the split information contents to which the mark information CD is set are automatically extracted from a plurality of presentation screens in the projectors 2 so that they are send out in real time. The term, "real time" described herein means affirmative concept such that a delivery can be performed quickly after the electronic conference has been completed, not negative concept such that a delivery is performed another day after the electronic conference has been completed. This also allows the electronic information contents DOUT of data stream form to be distributed (broadcast) to the notebook personal computers PCi, the communicator 3 and the like, which are arranged in another place such as remote place, in unison.

Although the communicator 3 and the creator 5 are connected to each other through the communication cable 40, the HUB 9B connects the access point 6 in this system 101 so that it can perform the wireless communication processing toward a wireless LAN card 4A installed in any notebook personal computers PCi. Of course, wired communication processing may be performed using normal communication cable. A combination of these items allows a network to be built. Further, the communicator 3 may be provided with wireless LAN function, thereby performing the wireless communication processing such that it directly access the wireless LAN card 4A installed in each of the notebook personal computers PCi (a Peer-to-Peer mood).

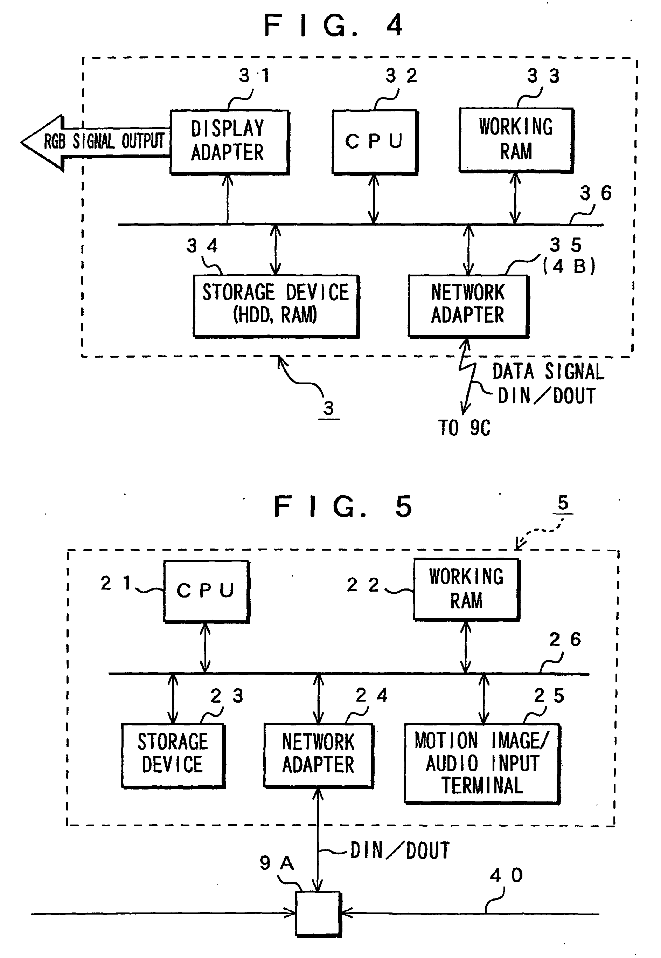

Next, the following will describe an internal configuration of the communicator 3. The communicator 3 shown in FIG. 4 has a personal computer function and performs information processing by operating a mouse of any notebook personal computers PCi. The communicator 3 has a data bus 36, to which a display adapter 31, a CPU32, a work RAM 33, a data storage device 34, a network adapter 35, and the like are connected.

The display adapter 31 has a function for processing presentation materials to create an RGB signal. This RGB signal based on the presentation materials is output to the projector 2. The work RAM 33 temporarily stores a private IP address and image information for presentation by developing the CPU 32.

The data storage device 34 is constituted of a hard disk (HDD), not shown, an ROM, and an RAM. The hard disk stores the presentation materials. In the ROM, a control program (hereinafter referred to as "system-assisting-control program") for assisting an electronic conference system 101 is described. Of course, the system-assisting-control program may be described in the hard disk. This enables ROM to be deleted. The system-assisting-control program is comprised of basic software for operating CPU 32 and a presentation-data-processing program.

The network adapter 35 sends and receives presentation data and a variety of kinds of commands to and from the notebook personal computers PCi. The network adapter 35 connects the HUB 9C. If the communicator 3 is provided with the wireless LAN function, the wireless LAN card 4B is installed in the network adapter 35. The CPU 32 controls input/output operations to the display adapter 31, the work RAM 33, the data storage device 34, the network adapter 35, etc. based on the system-assisting-control program. This is because a variety of kinds of programs are processed. The CPU 32 controls presentation image display based on information on the materials transferred from any notebook personal computers PCi or the like. In other words, the CPU 32 assists information processing in a network that includes input/output control in the projector 2 and the creator 5 based on remote-control instructions from any notebook personal computers PCi.

For example, the CPU 32 controls the creator 5 so that it can store the mark information CD obtained on the basis of the GUI function of any notebook personal computers PCi together with the time information thereof. Alternatively, the mark information CD or the like, which is input by operating the operation screen (Web screen) of the notebook personal computer PCi of a client, is informed directly to the creator 5. This mark information CD is identification information for setting a mark corresponding to the displayed information contents DIN. The mark is set to classify the displayed information contents DIN into arbitrary split information contents. It is also set to make easy the editing process of the electronic information contents DOUT etc. Further, the CPU 32 administrates the notebook personal computer (s) PCi that are used by the conference attendee(s).

Next, the following will describe an internal configuration of the creator 5. The creator 5 shown in FIG. 5 is an apparatus for storing desired displayed information contents DIN together with the time information TD thereof to create the electronic information contents DOUT and has a data bus 26. To the data bus 26, a CPU 21, a work RAM 22, a storage device 23, a network adapter 24, and motion image/audio input terminal 25 are connected. The work RAM 22 (for example, a hard disk) temporarily stores motion image/audio information and control programs to process the transferred and received information (information related to the motion image or still image). The storage device 23 stores the displayed information contents DIN relative to the presentation materials together with the time information TD thereof as well as motion image/audio information etc. and control program for processing them.

The CPU 21 performs processing on a variety of kinds of programs as well as allows the displayed information contents DIN, which is displayed on the projector 2, and image/audio information acquired by the TV conference apparatus 7 to be stored in the storage device 23 or RAM 22 together with their time information TD to create the electronic information contents DOUT. The displayed information contents DIN is still image information based on the presentation materials prepared by the presenter of materials; the image information is motion image contents obtained by shooting a situation of the conference; and audio information is voice contents obtained by recording it from the attendee of the conference. This is because the contents of electronic conference are recorded and saved as a record of proceedings.

In the creator 5, the mark information CD is set corresponding to the displayed information contents DIN to be stored in the RAM 22 or the storage device 23 using the GUI function of any notebook personal computers PCi. The mark information CD may be set to the displayed information contents DIN regularly or irregularly. This is because it is made easy to perform the editing process of the specific presentation materials or the like such as examination questions.

In the creator 5, CPU 21 classifies the displayed information contents DIN into arbitrary split information contents such as a thumbnail based on the mark information CD. The split information contents are split according to the time information TD. This is because reproducing order of the split information contents may be replaced or unnecessary split information contents may be deleted from the reproducing items. CPU 21 allows the numbers of marks, time, and the titles relative to the mark information CD to be stored. Such the numbers of marks, time, and the titles are stored in the storage device 23 or the like, and displayed on liquid crystal display 11 of any notebook personal computers PCi or the like in a list form. This is because the editing process is made easy. CPU 21 edits the displayed information contents DIN to secure it in data stream, thereby creating the electronic information contents DOUT. This is because a record of proceedings may be delivered via a network.

Thus, it is possible to deliver (broadcast) the electronic information contents DOUT of data stream form to a plurality of client PCs and the communicator 3 in unison. It is noted that to the data bus 26, the motion image/audio input terminal (I/O interface) 25 is connected, and the television conference apparatus 7 is also connected, thereby enabling motion image and audio information to be received from this television conference apparatus 7. The network adapter 24 is used for connecting the communicator 3. Of course, it connects not only the communicator 3 but also the client PC and the access points.

Thus, the creator 5 stores the information relative to the presentation materials displayed by the communicator 3 as described above, as well as stores information transferred from the communicator 3 such as the information of the attendee participated in the electronic conference (information on IP addresses or his or her face photographs), motion image and audio information, and the like. Thus, on the end of recording, it is possible to automatically create the conference contents, this is, a record of proceedings of the conference.

For example, the creator 5 lists the numbers of marks and their time based on the displayed information contents DIN transferred from the communicator 3 and the mark information CD transferred from any notebook personal computers PCi, and manages them. In this embodiment, MARK data such as a number of mark, 1; marked time, 00:00:02; and title of the mark, opening declaration as an original thereof is listed in a Mark list and then, the list is displayed on the display devices of the notebook personal computers PCi.

If there are notebook personal computers PCi of multiple attendees in the conference, control of the above creator 5 and television conference apparatus 7 is carried out under the control of one client notebook personal computer PCi among them. This is, a notebook personal computer PCi serving as a clerk (hereinafter referred to as "client PC for recorder") administrates it. In order to become the client PC for recorder, it is enough to open a control screen (CONTROL) used for operation screen for the creator 5.

In the client PC for recorder, it is possible to edit the displayed information contents DIN in a state where the split information contents are not replaced so as to be maintained as original in the record of proceedings in the electronic conference, namely, a case where the reproducing order is not replaced, and in a state where the split information contents are replaced according to the recommendation of the record of proceedings, namely, a case where the reproducing order is replaced. The split information contents thus edited are stored in a memory of the creator 5 and managed. The electronic information contents DOUT are the ones obtained by combining the split information contents thus edited by data stream form to group them. The conference contents are created so that they can be reproduced in time series.

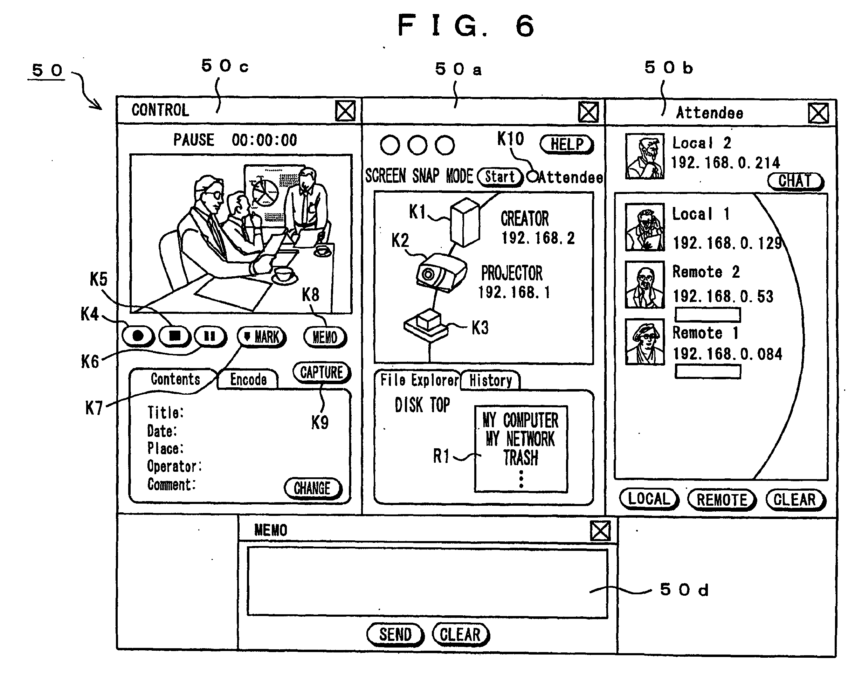

Next, the following describe GUI screen 50, a menu screen PO, and contents-manager screen 50e in the client PC in accordance with FIGS. 6 through 8. GUI screen 50 shown in FIG. 6 is displayed when a notebook personal computer PCi of a client for recorder exclusively controls another notebook personal computer PCi to display. The GUI screen 50 is composed of almost three display screens that are horizontally split. On a center thereof, a basic screen 50a is displayed; on the right side thereof, an attendee screen 50b for displaying information relative to the attendees who is participating in the conference is displayed; and on the left thereof, a control screen 50c for controlling the creator 5 is displayed. Further on the bottom of the display screen, an oblong memorandum screen 50d is displayed.

On the upper side of the basic screen 50a, icons for electronic apparatuses constituting the network that are connected to the corresponding electronic conference system 101 are displayed. In an example as shown in FIG. 6, icon K1 for the creator 5, icon K2 for the communicator 3s, and the like are displayed. Icon K3 for the television conference apparatus 7 is also displayed.

Lower side of the basic screen 50a is used for a list column for fails, in which names of the file R1 stored in the notebook personal computer PCi of the client, which serves as the presenter, are displayed. On the attendee screen 50b, face photographs of the attendees, private IP addresses of the client PCi that the attendees have, and the like, are displayed.

On the top of the control screen 50c is image display portion on which image shot by the video camera 7a is displayed as motion image. On the middle thereof, a line-like display area that is soft-key operation portion containing function keys is displayed, and on the bottom thereof, input portion for inputting the title is displayed. In the soft-key operation portion, a record "REC" key K4, a "STOP" key K5, a pause "PAUSE" key K6, a marking "MARK" key K7 for marking important image portion in the record, a memorandum "MEMO" key K8 for opening the memorandum screen, a capture "CAPTURE" key K9 for preserving still image information (presentation materials) displayed using the projector 2, and the like, are displayed.

When the communicator 3 is logged on from a client PCi, only the basic screen 50a is displayed on a display screen of the client PCi. If it performs DRUG&DROP on a file list in the file names R1 to the icon K1 of the communicator 3, that file data (presentation materials) is transferred to the communicator 3, thereby displaying it using the projector 2 to carry out the presentation. This, however, is available for only a case where a notebook personal computer PCi of a client who is qualified to carry out the presentation is operated.

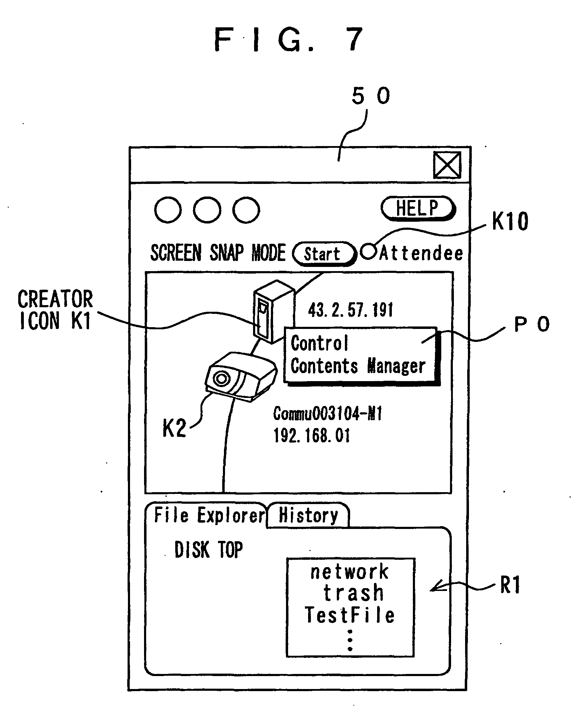

When an attendee "Attendee" button K10 in the basic screen 50a is pressed, the attendee screen 50b as shown in right side of FIG. 6 is displayed. When the creator icon K1 is then right-clicked, a menu screed as shown in FIG. 7 pops up, so that if an item, "Control" is selected from the menu screen, the control screen 50c shown in FIG. 6 is displayed. If the memorandum "memo" key K8 is selected from the control screen, the memorandum screen 50d is displayed on a lower portion of GUI screen 50 as shown in FIG. 6 to input a sentence therein. The memorandum screen 50d has a room for a space of four to six lines.

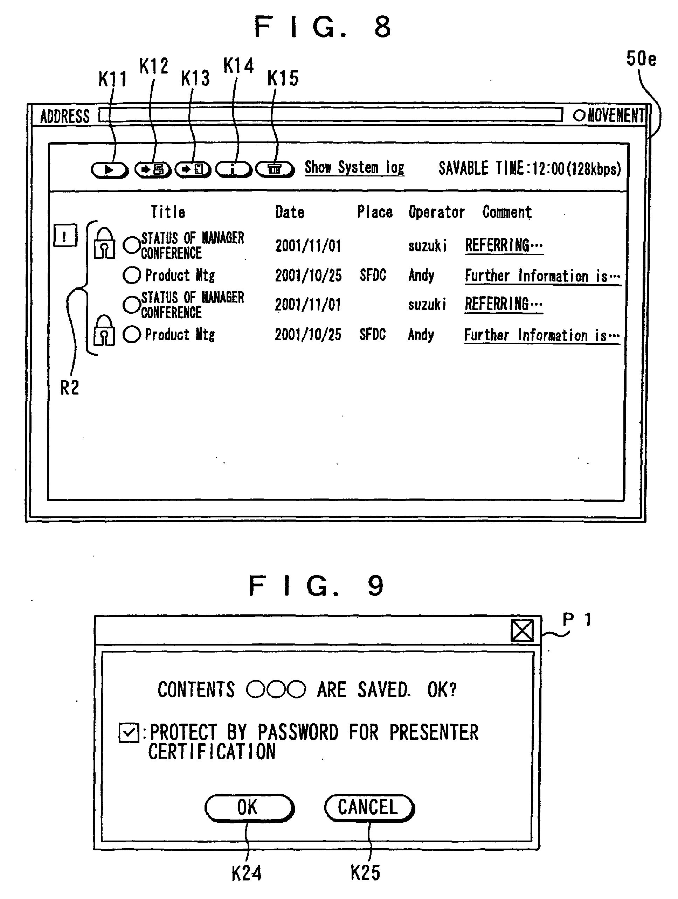

If the item, "Contents Manager" is selected from the menu screen shown in FIG. 7, a contents-manager screen 50e as shown in FIG. 8 is displayed. The contents-manager screen 50e displays a list menu stored in the creator 5. In addition to the contents list R2 stored in the creator 5, the contents-manager screen 50e as shown in FIG. 8 displays soft-keys for selecting operation modes against the selected contents list R2.

In this system 101, a review "REVIEW" key K11 for reproducing the selected contents, a client transfer "DOWNLOAD TO MY COMPUTER" key K12 for transferring the selected contents to a client PCi, a server transfer "UPLOAD TO SERVER" key K13 for transferring the selected contents to a server, a particular "SHOW CONTENTS INFORMATION" key K14 for showing detailed information on the selected contents, a delete "DELETE" key K15 for deleting the selected contents, and the like, are displayed.

Next, the following will describe confirmation screen PI for recording and saving in the control screen 50c. The confirmation screen PI for recording and saving shown in FIG. 9 is displayed when the "STOP" key K5 is pressed in the control screen 50c of the notebook personal computer PCi for recorder. The stop, "STOP" key K5 is pressed to stop the record and to confirm whether the contents are created. In the moment, if a password is applied for reviewing, the input is available. For example, the review "REVIEW" key K11 is clicked. A message, "Contents ○ ○○ are saved. OK?" and a message, "Protect by a password for certification by the presenter" are displayed on this screen P1, and then the password can be input.

A mark area for confirmation check is also displayed. If the mark area is clicked, a checking symbol v is displayed. On the lower portion of the screen P1, a "OK" bottom K24 and a chancel "CHANCEL" bottom K25 are provided. Herein, if the "OK" bottom K24 is licked to perform saving operation, the conference contents are automatically created. When performing an operation other than the contents-creating process operation, the chancel "CHANCEL" bottom K25 is clicked. Thereby, the process is finished without creating any contents.

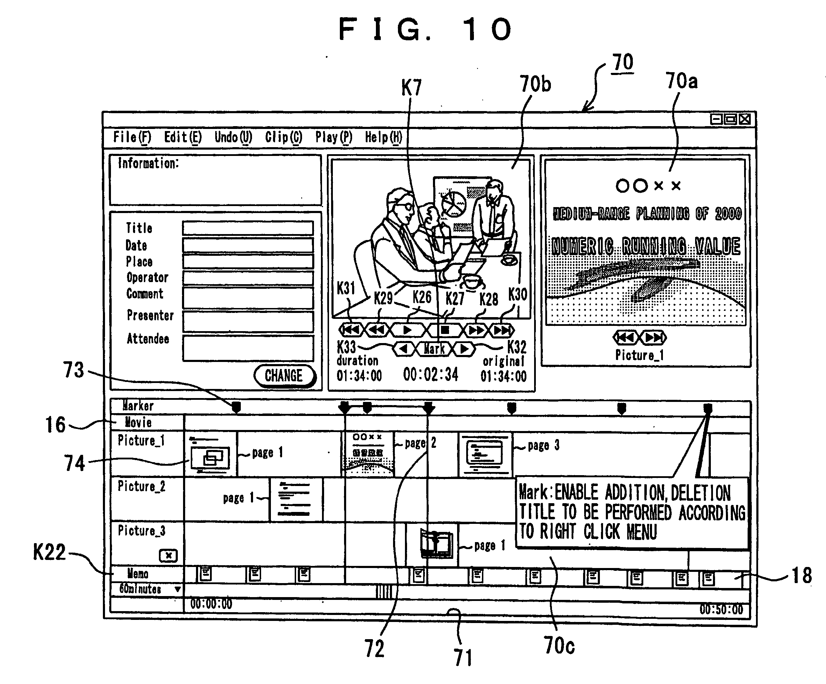

Next, the following will describe a contents-editing screen 70 relative to a contents-editing software. The contents-editing screen 70 shown in FIG. 10 is displayed on a notebook personal computer PCi of a client. On the left upper portion of the contents-editing screen 70, basic information such as a title of the selected contents is displayed. On the right upper portion of the contents-editing screen 70, a still image display area 70a is present and a still image corresponding to current time is displayed on the area 70a. "Current time" means time when a marker is specified and mark information CD is set in a record of the displayed information contents DIN. This time is obtained from the time information TD.

On the middle portion of the contents-editing screen 70, a motion image display area 70b is present and a motion image corresponding to the current time is displayed on the area 70b. The motion image corresponding to the current time is obtained by shooting a situation in the conference room by the TV conference apparatus 7 from time when a marker is specified and its mark information CD is set to time when next marker is specified and its mark information CD is set. On the other hand, relative to the still image corresponding to the current time, for example, the presentation materials used from time when a marker is specified and its mark information CD is set to time when next marker is specified and its mark information CD is set are displayed. On a lower half of the middle portion of the contents-editing screen 70, an editing area 70c is allocated wherein the motion image, still image and memorandum stored in the creator 5 are respectively arranged along a time axis 71.

According to the editing area 70c, for example, the images (Pictures) by the three projectors 2 are displayed. This is because the three projectors 2 are arranged in one conference room and using the presentation screens of the projectors 2, the creator 5 may edit the split information contents wherein its mark information is set to send out the conference contents. In this example, at a line of Picture 1, images of Pages 1 to 3 by the projectors 2 are displayed on the basis of their time information TD. The image of Page 1 is projected by a first projector 2, and is illustratively the presentation materials used from time (current time: 00:00:00) when a marker is specified and its mark information CD is set to time (00:05:00) when next marker is specified and its mark information CD is set.

The image of Page 2 is projected by the first projector 2, and is illustratively the presentation materials used from time (00:12:00) when a marker is specified and its mark information CD is set to time (00:18:00) when next marker is specified and its mark information CD is set.

The image of Page 3 is projected by the first projector 2, and is illustratively the presentation materials used from time (current time: 00:24:00) when a marker is specified and its mark information CD is set to time (00:30:00) when next marker is specified and its mark information CD is set.

At a line of Picture 2, an image of Page 1 projected by a second projector 2 is displayed based on its time information TD. The image of Page 1 of the Picture 2 is projected by the second projector 2, and is illustratively the presentation materials used from time (00:08:00) when a marker is specified and its mark information CD is set to time (00:12:00) when next marker is specified and its mark information CD is set.

At a line of Picture 3, an image of Page 1 projected by a third projector 2 is displayed based on its time information TD. The image of Page 1 of the Picture 3 is projected by the second projector 2, and is illustratively the presentation materials used from time (00:16:00) when a marker is specified and its mark information CD is set to time (00:24:00) when next marker is specified and its mark information CD is set.

These images of Pictures 1 to 3 are displayed as thumbnail 74, which is one example of the spit information contents, and are subject to a display in the still image display area 70a. In this example, the thumbnails 74 of Pictures 1 to 3 are displayed on the editing area 70c. In any Pictures 1 to 3, a time axis 71 is indicated longitudinally as one example of the time information. On the time axis 71, time from (00:00:00) to (00:50:00) is indicated. It is noted that indications of time, (00:05:00), (00:12:00), (00:16:00), (00:08:00), (00:18:00), (00:24:00), and (00:30:00) are deleted. In this example, if a thumbnail 74 is selected in the editing area 70c, its motion image is brought into sync with it to drift into time the thumbnail 74 indicates.

In other words, in the editing area 70c, a display band for displaying reproducing information of motion image or audio, a display band for displaying still image, and a display band for displaying memorandum are arranged along the time axis 71. The display band for displaying reproducing information of motion image or audio displays current time for display in the motion image display area 70b of the editing screen 70. In the display band for displaying still image, a part of the display band which corresponds to display time of the still image is displayed in a state different from another part thereof, so that the thumbnail of the still image corresponding to the part of the display band is displayed. In this example. Pictures 1 to 3 correspond to respective parts of the display band, as described above. The thumbnail 74 and the current time have been described as above.

On the bottom of this editing area 70c, the time axis 71 is provided, which has been described. In this example, a unit of the time axis 71 displayed in the editing screen 70 is changeable so that it can be set to 1, 2, 5, 10, 15, 30, and 60 minutes, respectively, and a part not included in these units, namely, a domain impossible to be displayed by diminishing the units may be displayed by means of retrieving it with a scroll bar, which is not shown. Time scale (Movie) 16 for motion image is provided on the top of the editing area 70c. Editing Markers 73 composed of downward pentagonal symbols are provided at upper side of the time scale 16 and the editing markers 73 may be freely set by a "Marker" key K7, which will be described later.

A memo, "Memo" key K22 is provided under the display band of the Picture 3, and a row of various kinds of icon keys 18 is arranged on the side of this key K22. The memo, key K22 is used when the contents of the memorandum screen 50d, shown in FIG. 6 are displayed. The memorandum screen 50d has a room for a space of four to six lines, so that letters for memo (memorandum; comments) relative to the presentation in the conference can be input thereinto, and this memo can be confirmed thereinafter. A part of this memo display band 18 which corresponds to display time of the memo is displayed in a state different from another part thereof, so that icon for the memo corresponding to the part of the display band is displayed. Further, the still image or a right end of the memo display band is dragged and dropped (picked to move) to alter a length of the band so that the displayed time can be changed.

Between the time scale 16 and the display band 18, a current time line 72 which is longitudinally movable is displayed with it crossing the display areas of Pictures 1 to 3, which indicates current time. In this example, the current time line 72 is displayed with it crossing an image of the line of Picture 3. The current time line 72 is not always positioned at this point, but is longitudinally movable as described above so that the current time line 72 can be operated to run from the right to the left in the screen. Based on the time line 72, the still image is inserted, the motion image is reproduced and the still image is displayed. In this case, relative to the insertion of still image, the current time line 72 runs with it crossing Page 2 of Picture 1 so tat Page 2 of Picture 1 can be selected, thereby displaying an image of Page 2 of Picture 1 in the still image display area 70a.

A cut-in point and a cut-out point may be specified according to a visible method with a position of the motion image and display timing of the still image being confirmed by the time line 72 and thus, cut and merge operation between the motion image and the still image can be performed. Concerning the cut of the still image, for example, time when a desired still image is cut (cut-in point) and next marked time (cut-out point) are specified and the mark 73 of any one of the cut-in and cut-out points is then right-clicked to display a menu screen, not shown, in which a item, "delete" is selected. Concerning the motion image, according to this cut of the still image, the motion image of this display timetable is also cut.

It is noted that on the bottom of the motion image display area 70b, in addition of the marking "MARK" key K7, a running key K26 for the timeline 72, a stop key therefor K27, a forward key therefor K28, a backward key therefor K29 and the like are provided. The running key K26 is used when running the timeline 72 from side to side. The stop key K27 is used when stopping the timeline 72. The forward key K28 is used when making the timeline 72 forward. The backward key K29 is used when making the timeline 72 backward. Next to the forward and backward keys K28, K29 and the like, a right skip key 30 and a left skip key K31 are provided. The right skip key 30 is used when the timeline 73 skips the Marker 72 that is positioned right next thereto. The left skip key 31 is used when the timeline 72 skips the Marker 73 that is positioned left next thereto.

On both sides of the marking "MARK" key K7, a right arrow key K32 and a left arrow key K33 for setting a display from including the timeline 72 are provided. The right arrow key K32 is used when retrieving Mark 73 in a right direction in the marker display band. The left arrow key K33 is used when retrieving Mark 73 in a left direction in the same band. Using these keys K7, K26 to K33 and the like enables operation of an editing process to be increased.

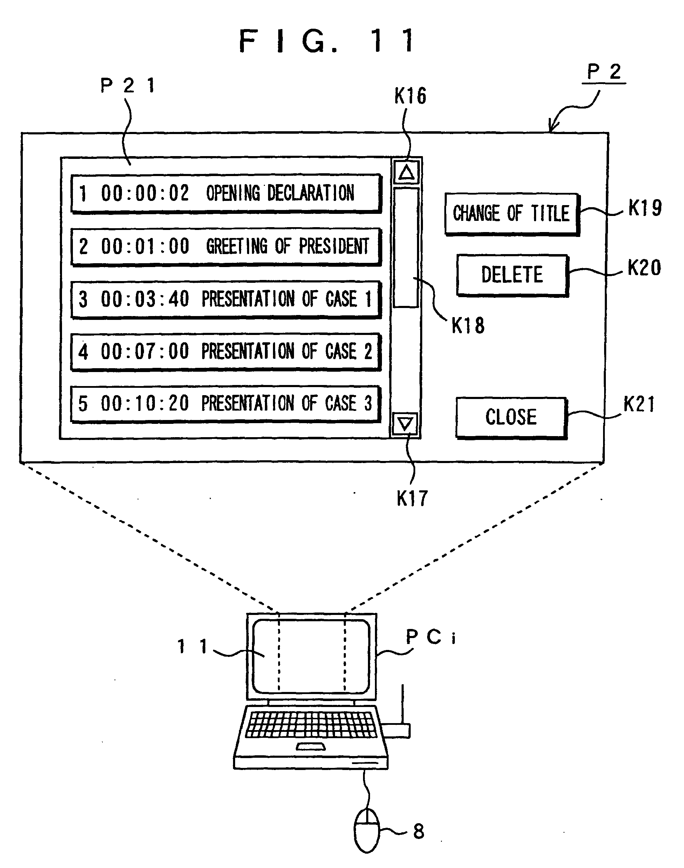

Next, the following will describe the editing screen P2 for mark list. The editing screen P2 for mark list shown in FIG. 11 is displayed based on operation in the contents-manager screen 50e by the notebook personal computer PCi for recorder. Of course, it may be done using editing software, not using the contents-manager screen 50e. On the screen P2, a mark list area P21 is provided in which, for example, concerning numbers of marks, 1 to 5, time and titles of these marks are listed in a list form. In the mark list area P21, an up key K16 and an down key K17 for retrieving and tool bar K18 are set to allow the numbers of the marks, time, and titles to be retrieved. On left side of the up key K16 and the down key K17, and the tool bar K18, a title change key K19, a delete key K20, and a close key K21 are provided. The title change key K19 is used when changing the title of mark. The delete key K20 is used when deleting the number of mark. By deleting the number of mark, the time and title belonged to the number of mark may be deleted concurrently. The close key K21 is used when closing the editing screen P2 for mark list. If replacing an order of marks, this is done by dragging and dropping the number of mark.

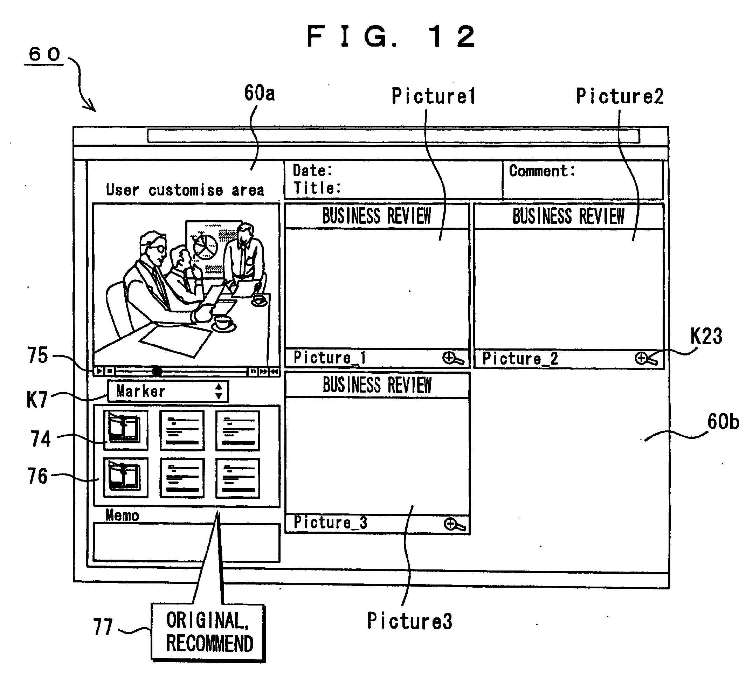

Next, the following will describe a contents-reproducing screen 60. The contents-reproducing screen 60 shown in FIG. 12 displays conference contents on the notebook personal computer PCi for a client based on the editing screen 70, for example, which has been described in accordance with FIG. 10. The contents-reproducing screen 60 has such a screen configuration, as shown in the figure, that a motion image reproducing screen 60a recording a state of the conference on film and a still image reproducing screen 60b for the presentation materials, which is the still image information used in this conference, are displayed in a split way in which the motion image reproducing screen 60a is positioned at a left upper portion thereof and the still image reproducing screen 60b is positioned at a right half thereof, thereby displaying them concurrently on the same display screen. Therefore, the still image reproducing screen 60b for the presentation materials has different display patterns based on maximum number of the projectors 2 set in one conference room. In this embodiment, up to three projectors 2 are connected thereto, thus maximum three presentation materials may be displayed so that a reproducing screen configuration of the still image reproducing screen 60b has a display pattern having four split screens at the maximum.

This display pattern is a display example where three projectors 2 are used. Still image, Picture 1, is presentation materials displayed using a first projector 2 and similarly, still images, Pictures 2 and 3, are presentation materials displayed using other second or third projector 2. At reproducing the contents, the presentation contents displayed on the still image reproducing screen 60b are automatically changed over along the time passing.

The motion image reproducing screen 60a displays the above motion image and View change portion 75 under an image display portion thereof. Under the View change portion 75, a marking "Mark" key K7 is provided, which is used when selecting the thumbnail 74. Images of Pictures 1 to 3 constituting the thumbnail 74 correspond to time when the marker is specified and set, as shown in FIG. 10. Under the marking "Mark" key K7, a display portion is allocated and split in two columns so that it can display six thumbnail 74 of the presentation materials displayed by the projector at the maximum. Displaying the thumbnail 74 on the display portion 76 is referred to as "mark display". When plural projectors 2 are used, materials displayed by the selected one of the projectors 2 are displayed by thumbnail.

In this example, if an arbitrary thumbnail concerning the still image by the first projector 2 is selected using the marking "Mark" key K7, the motion image displayed above the display portion 76 is also brought into sync with it to shift to time when the thumbnail 74 is displayed and is normally reproduced starting from the time. Herein, the selected thumbnail 74 is set to Picture 1 so that it can be enlarged and displayed in the still image reproducing screen 60b. Thus, in spite of the contents of Picture 1 displayed on the still image reproducing screen 60b, the ones of the thumbnails 64 thus mark-displayed are replaced. In this example, in the electronic conference, marked conference contents are enlarged and displayed.

In other words, in an example of the contents-reproducing screen 60, during the conference, the notebook personal computer PCi for recorder displays title (if no title is obtained, "untitled" is indicated) and its time that are allocated during editing process according to a pressed order of the marking "Mark" key K7 in the control screen 50c thereof. If title, "original, Recommendation" or the like in mark display column 77 is clicked with a mouse 8, the motion image displayed above is also brought into sync with this to shiftup to the time and make it normally reproduced. This allows the motion image and the still image (presentation materials) to be displayed with them being always brought into sync with each other. The displays are respectively changed according to the passage of time in reproducing. On each of the bottom portions of the respective display portions in the still image reproducing screen 60b as described above, an enlarging display button K23 for enlarging the screen, which imitates a magnifying glass, is provided and if this is selected, the displayed still image is switched to display maximum display pattern (original sized display).

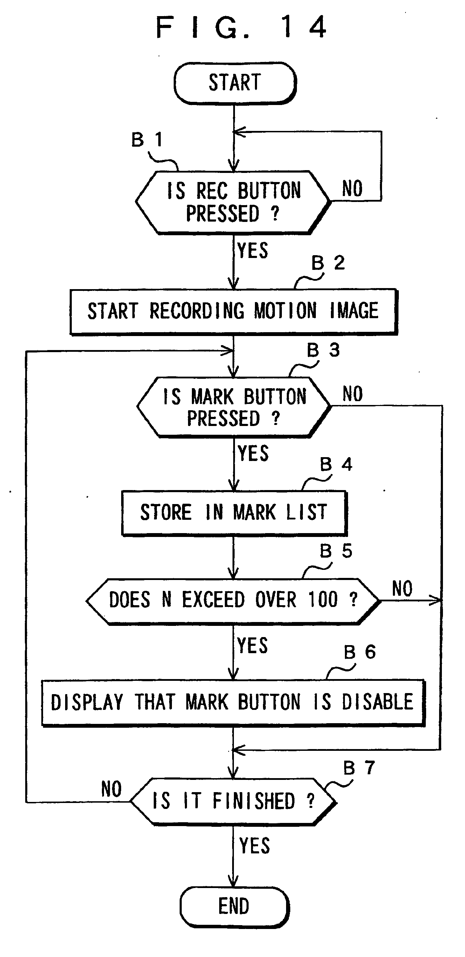

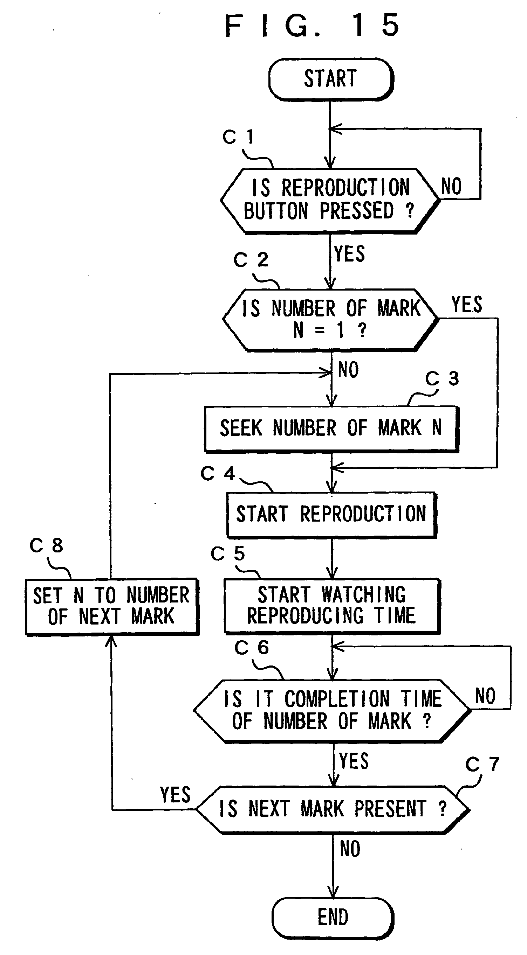

Next, the following will describe a processing example in the network electronic conference system 101. FIG. 13 is a flowchart for showing a system-processing example at the network electronic conference system 101. FIG. 14 is a flowchart for showing a processing example in recording the displayed information contents DIN. FIG. 15 is a flowchart (subroutine) for showing a processing example in reproducing them.

In this example, a creator 5 (information-creating system I) and a presentation apparatus 10 (information-controlling-and-displaying system II) are arranged in one conference room or the like as well as at least one notebook personal computers PCi (information-processing system III) are prepared in the conference room.

The creator 5 and the communicator 3 are used so that they can be connected to each other through HUBs 9A and 9C and the communication cables 40. The access point 6 is connected to the communication cable 40 through HUB 9B. Each of the notebook personal computers PCi has a wireless LAN, so that the access point 6 and each of the notebook personal computers PCi are connected to each other through the wireless LAN. Of course, a notebook personal computer PCi, a projector 2, a communicator 3 and a creator 5 are powered on.

In this example, a presenter for materials transmits from his or her notebook personal computer PCi to the communicator 3 via the network text file (s) and/or image file (s) for the presentation. According to the transmission of the image file(s), the presentation materials may be presented on the projector 2. The presenter performs an operation for obtaining an operation right of the mouse 8 on the communicator 3 so that he or she can perform presentation with an icon showing on a display screen of the projector 2. It is noted that an example where a frequency N for setting the marks is 100 at the maximum is illustrated. Of course, this invention is not limited to that the frequency N for setting the marks is 100 at the maximum.

According to these processing requirements, at Step S1 in the flowchart as shown in FIG. 13, an application software for the electronic conference is activated using any notebook personal computers PCi of the attendees in the conference to log on the communicator 3. In this case, a first attendee in the conference sets a password and then, a second attendee or later therein may participate in this conference by inputting the password. Since the password is not a previously predetermined value proper for this electronic conference, it is possible to solve such a disadvantageous problem that the electronic conference cannot be activated by forgetting the password or accidentally inputting it.

Then, the process goes to Step S2 where if the attendee in the conference opens the control screen 50c, in GUI screen 50, for allowing the attendee in the conference to operate the creator 5, only this client becomes the client notebook personal computer PCi for recorder. This is because it controls another notebook personal computer PCi exclusively to display (see FIG. 6). In other words, on GUI screen 50 of the notebook personal computer PCi, the icon K1 of the creator 5, shown in FIG. 6, is right-clicked and if an item, "control" is selected from the displayed menu screen P0, the control screen 50c is displayed.

The process goes to Step S3 where if the record "REC" key K4 in the control screen 50 is pressed, the television conference apparatus 7 that has been previously connected to the corresponding one and activated starts recording images in the conference. In this moment, the motion image and audio information from the television conference apparatus 7 having a camera 7a, a microphone 7b, and the like as shown in FIG. 3 are encoded and saved in the work RAM (hard disk) 22 in the creator 5.

In the client PC for the recorder, for example, the process then goes to a subroutine shown in FIG. 14 and, at Step B1 therein, it waits for pressing the record "REC" key K4. If the record "REC" key K4 is pressed, at Step B2, the creator 5 starts recording the motion image. The process then goes to Step B3 where it is checked whether the marking key K7 is pressed partitioning a set period of time in the notebook personal computer PCi. In this moment, a user sets the marks each turning point such as a change of topics and presenters in storing using the marking key K7 of the control screen 50c. If the marking key K7 is pressed in the notebook personal computer PCi during a set period of time, the process goes to Step B4 where the creator 5 stores the numbers of marks, "1, 2, ..." in the Mark list together with their marked time, "00:00:01" or the like. The Mark list is expanded into the storage device 23, for example.

The process then goes to Step B5 where the creator 5 checks whether a frequency N of mark exceeds over 100, which has been previously set. This frequency N of mark means relative criterion setting, which the frequency N=100 of mark is not just set. If the frequency N of mark exceeds over 100, the process goes to Step B6. At Step B6, the notebook personal computer PCi displays that the marking key K7 is disable. This is because it allows the user to be known that this mark specifying processing is limit.

Alternatively, if the marking key K7 in the notebook personal computer PCi is not pressed at Step B3 over a set period of time, and the frequency N of mark does not exceed over 100 at Step B5, the process goes to Step B7. At Step B7, the creator 5 determines whether the record of the displayed information contents DIN is finished. If the record is to be finished, the process is finished. If the record is not to be finished, the process goes back to Step B3 where the marking key K7 is pressed and the above processing is repeated.

If the "MEMO" key K8 is pressed on the control screen 50c shown in FIG. 6, the memo screen 50d is opened to allow the text to be input. If the "SEND" key K17 as shown in the same figure is pressed, the input text is taken in the creator 5. The memo screen has a room for a space for inputting characters having about four to six lines allocated therein, and thus, a memo (memorandum: comment) relative to the presentation in the conference is input thereinto by characters so that this memo can be confirmed later. This function is well convenient for editing.

Herein, the process goes back to Step S3 of the flowchart shown in FIG. 13, and at Step S4, if the presentation materials are dragged and dropped from a file list R1 of the notebook personal computer PCi to the icon K2 of the display-desired projector 2, the presentation materials selected from the file list are shown on the screen of the projector 2. At the same time of this, the presentation materials, the page-switching information, and the like are stored in the work RAM 22 in the creator 5.

In this moment, based on the displayed information contents DIN transferred from the communicator 3 and the mark information transferred from the notebook personal computer PCi, the creator 5 lists the numbers of marks and their time and managed. For example, the Mark list is grouped as MARK original data according to the following list form and it is stored as the mark list in the storage device 23:

| Number of Mark | Time of Mark | Title of Mark |
|---|---|---|
| 1 | 00:00:02 | Opening Declaration |
| 2 | 00:01:00 | Greeting of President |
| 3 | 00:03:40 | Presentation of Case 1 |
| 4 | 00:07:00 | Presentation of Case 2 |
| 5 | 00:10:20 | Presentation of Case 3 |
| 6 | 00:20:00 | (Untitled) |
| 7 | 00:34:20 | General Comment |

Herein, a term, "original" means contents of a state where the split information contents have not been replaced, namely, the reproducing order thereof has not been replaced. The title of mark is input when or after the mark is set utilizing the GUI function of the client PC for recorder.

The process goes to Step S5 where the, "STOP" key K5 is pressed on the control screen 50c to stop the record. In the moment, the notebook personal computer PCi for the recorder side displays a saving-confirmation screen P1 as shown in FIG. 9. In every case excluding such the saving processing, the contents thereof are cancelled. Of course, it means that the displayed information contents DIN has been saved in the storage device 23 and the data excluding the contents are deleted from those of the notebook personal computer PCi for the recorder side that has been edited. In performing saving operation, the process goes to Step S6 where the conference contents are automatically prepared.

In other words, at Step S6, the conference contents are prepared based on the still-picture information obtained from the communicator 3 and moving-picture-and-audio information obtained from the television conference apparatus 7. In this moment, the creator 5 creates the electronic information contents DOUT constituting the conference contents, in which the still image and the motion image in the conference room for the presentation are secured in one data stream. In order to refer the conference contents including the motion image via a network such as the Internet, file data is converted into HTML format.

The process then goes to Step S7 where the contents-manager screen 50e is automatically displayed when a creation of the conference contents is completed. Of course, the invention is not limited to such the automatic display, and thus, the contents-manager screen 50e may be manually displayed. On the screen 50e, it is possible to confirm the conference contents that are saved in the creator 5 (see FIG. 8). At Step 8, when selecting the desired conference contents from this contents-manager screen 50e, the contents thereof may be reproduced.

In this moment, the mark-list-editing screen P2 shown in FIG. 11 is displayed on the contents-reproducing screen 60, so that it can be freely selected and viewed. On the contents-editing screen 70 shown in FIG. 10, the conference contents are edited. For example, a subroutine shown in FIG. 15 is called and, at step C1 of the flowchart, the client PC for recorder waits for pressing the review key K11. If the review key K11 is pressed, at Step C2, it is checked whether the number of mark is N=1.

If N=1, the process goes to Step C4. If not N=1, the process goes to Step C3. At Step C3, it seeks to the number of mark of N=1. The process then goes to Step C4 where the creator 5 starts reproduction. The process then goes to Step C4 where the creator 5 starts watching the reproducing time. The process then goes to Step C6 where it is checked whether it has reached at completion time of reproducing of the number N of the mark. If it has reached at completion time of reproducing of the number N of the mark, the process then goes to Step C7 where it is checked that next mark is present.

If next mark is present, the process goes to Step C8 where N is set to the number of the next mark. The process then goes back to Step C3 where the process described above is repeated. If next mark is not present at Step C7, the process is finished. The process then goes back to Step S8 of the flowchart shown in FIG. 13. The conference contents in which the displayed information contents DIN are confirmed are transferred to a server apparatus, not shown, at Step S9 to be saved. If the conference contents are reproduced at Step S8 and edited, the process goes to Step S10 where the conference contents are transferred to a side of the notebook personal computer PCi in which it may be edited using a known editing software, by operating the contents manager screen 50e.

For example, Mark list is subject to text editing and may be modified to replace the reproducing order thereof. Herein, according the previous example, illustrated is a case where the number of mark of 6 is deleted and the number of mark of 5 is moved up between the numbers of marks of 2 and 3. The number of mark of 6 in the above Mark list is clicked. This is because the number of mark of 6 is deleted. Display colors of the time and the title belonging to the number of mark of 6 are also changed. The delete key K20 is then clicked. Thus, the time and the title belonging to the number of mark of 6 are also deleted concurrently. If the number of mark of 5 is moved up, the number of mark of 5 is dragged by the mouse 8 and dropped between the numbers of marks of 2 and 3. In the result thereof, the edited Mark list in the previous example is changed as follows:

| MARK data: recommendation | | |
|---|---|---|
| Number of Mark | Time of Mark | Title of Mark |
| 1 | 00:00:02 | Opening Declaration |
| 2 | 00:01:00 | Greeting of President |
| 5 | 00:03:40 | Presentation of Case 3 |
| 3 | 00:07:00 | Presentation of Case 1 |
| 4 | 00:10:20 | Presentation of Case 2 |
| 6 | 00:34:20 | General Comment |

Herein, the term, "recommendation" means a state in Mark list after the split information contents have been replaced, namely, the editing has been performed. Thus, using the editing software, Mark may be added and deleted or the title thereof is named. Specific GUI function (contents editing software) for being able to edit such the Mark list is prepared. The software may be always provided in any one of the notebook personal computers PCi, the creator 3, and the communicators 3. The edited electronic conference contents (conference contents) DOUT are transferred to a server apparatus, not shown, at Step S9 and saved therein. This allows the notebook personal computer PCi for recorder to reproduce the electronic conference contents DOUT on the server apparatus, not shown, at Step S11.

Thus, by the network electronic conference system 101 as the embodiment according to this invention, the creator 5 (information-creating system I) and the projector 2 and the communicator 3 (information-controlling-and-displaying system II) are arranged in a conference room as well as at least one notebook personal computer PCi (information-processing system III) are prepared in the conference room. The creator 5 and the communicator 3 are connected to each other using HUBs 9A and 9C and the communication cable 40. The access point 6 is connected to the communication cable 40 through HUB 9B. The access point 6 and any notebook personal computers PCi are connected to each other via wireless LAN. In the notebook personal computer PCi, arbitrary information is processed on the basis of the GUI function thereof.

On this assumption, the projector 2 controls the creator 5 so that it can store the mark information obtained on the basis of GUI function of any notebook personal computers PCi together with its time information TD. The projector 2 displays the still image etc. based on the information of materials or the like that is transferred from any notebook personal computers PCi. The creator 5 stores the displayed information contents DIN that are displayed with the projector 2, motion image and audio information, and the like together with their time information TD to create the electronic information contents (streaming data) DOUT.

Therefore, the displayed information contents DIN stored with the time information TD thereof can be classified according to the mark information CD so that motion image/audio can be classified into arbitrary split information contents or entire still image into split information contents such as the thumbnail 74, thereby performing the editing process wherein a reproducing order of a plurality of the motion image/audio and the still image classified by the mark information CD is replaced on the basis of the time information TD thereof or unnecessary thumbnail 74 is deleted from the reproduced items. This allows the motion image/audio and the still image to be reproduced according to the replaced order.

In this example, in reproducing the streaming data, the reproducing order is previously specified by Marker unit so that the reproducing order can be replaced without any editing operations and only necessary portion can be reproduced. For example, in reproducing the streaming data, the motion image or the still image can be reproduced with it being drafting to the previous by specified Marker position.

Specifying the reproducing order of the thumbnail 74 or the like previously by Marker unit utilizing this Marker key K7 allows the motion image or the still image to be reproduced according to the replaced order. Thus, the functions wherein a reproducing order is replaced or a reproduction is performed with unnecessary portion thereof being deleted may be realized without any editing operations.

As a result thereof, the same effect as that obtained by editing the displayed information contents DIN is obtained without performing any conventional editing operations. This enables the number of process concerning the editing operation to be deleted. Further, the original displayed information contents DIN remains unchanged so that the conference contents or the like having a different form from the previous one may be created merely by replacing the reproducing order.

Setting the reproducing procedure at random allows the image to be reproduced by marker unit at random, for example, any functions such that setting order of questions can be changed every time they are seen to be realized. A method for setting the Marker has been described concerning a case where it is set manually or a case where it is set every period of time, but if a period between the Markers is short, an accuracy of reproduction of the conference contents in the electronic conference system in the reproduction thereof is increased.

Thus, it is possible to easily create the electronic information contents DOUT such as the conference contents without any complicated editing operations. This enables the network electronic conference system 101 with easy-reproduction and edition of the contents to be provided.

Concerning the above-mentioned network-information-processing system, the electronic conference system has been described, but the invention is not limited such the system, and thus, the invention is also applicable to a network education system, a network game system, and the like to obtain the same effect as that obtained by the above.

For example, when the network education system is organized, every student is provided with a notebook personal computer PCi and then, each notebook personal computer PCi and study-assistant display device (information control display device) including a communicator and a projector are connected with each other by communication means such as wireless LAN. The study-assistant display device and the creator 5 are connected with each other through the communication cable 40. According to this system, the creator 5 is so controlled that it stores the mark information set on the basis of an input operation function of a notebook personal computer PCi operated by a student together with its time information. By this configuration, the contents grouping the learning points may be easily created without any complicated editing operations.

Further, when the network game system is organized, every game entry is provided with a notebook personal computer PCi and then, each notebook personal computer PCi and game-assistant display device (information control display device) including a communicator and a projector are connected with each other by communication means such as wireless LAN. The game-assistant display device and the creator 5 are connected with each other through the communication cable 40. According to this system, the creator 5 is so controlled that it stores the mark information set on the basis of an input operation function of a notebook personal computer PCi operated by a game entry together with its time information. By this configuration, the contents grouping the fighting remarkable image points may be easily created without any complicated editing operations.

### PROBABILITY OF UTILIZED INDUSTRIALIZATION

The present invention is well applicable to a network electronic conference system, a network education system, a network game system, etc.

## Claims

1. A network-information-processing system comprising:
at least one information-processing apparatus for processing arbitrary information, said information-processing apparatus having an input operation function;
information-controlling-and-displaying means for displaying an image based on information transferred from the information-processing apparatus;
information-creating apparatus for storing information contents displayed on the information-controlling-and-displaying means together with their time information to create electronic information contents; and
communication means for connecting at least the information-processing apparatus, the information-controlling-and-displaying means, and the information-creating apparatus,
wherein the information-controlling-and-displaying means controls the information-creating apparatus to store control information obtained on the basis of the input operation function of the information-processing apparatus together with the time information.

2. The network-information-processing system according to claim 1, wherein said information-controlling-and-displaying means includes:
a display apparatus for displaying the image based on the information transferred from said information-processing apparatus; and
information-processing-assisting apparatus for assisting electronic information processing including said display apparatus based on the input operation instruction by said information-processing apparatus.

3. The network-information-processing system according to claim 1, wherein the control information is set corresponding to the displayed information contents stored in said information-creating apparatus by using the input operation function of said information-processing apparatus.

4. The network-information-processing system according to claim 1, wherein the control information is set corresponding to the displayed information contents regularly or irregularly.

5. The network-information-processing system according to claim 1, wherein said control information is identification information for setting a mark to the displayed information contents.

6. The network-information-processing system according to claim 3, wherein said control information is identification information for setting a mark and said information-creating apparatus stores a number of mark, time, and title relating to the identification information.

7. The-network-information-processing system according to claim 1, wherein said information-creating apparatus classifies the displayed information contents into arbitrary split information contents based on said control information.

8. The-network-information-processing system according to claim 1, wherein a reproducing order of said split information contents is set using the input operation function of the information-processing apparatus.

9. The-network-information-processing system according to claim 1, wherein the displayed information contents are downloaded from said information-creating apparatus to said information-processing apparatus, and said information-processing apparatus reproduces the displayed information contents.

10. The-network-information-processing system according to claim 1, wherein the displayed information contents are edited using the input operation function of said information-processing apparatus, and said information-creating apparatus creates the electronic information contents based on the displayed information contents thus edited.

11. The-network-information-processing system according to claim 1 further comprising motion image/audio input apparatus for inputting at least image or audio, said image or audio excluding the information transferred from said information-processing apparatus.

12. An information-processing method comprising the steps of:
connecting at least one information-processing system for processing arbitrary information, said information-processing system having an input operation function, an information-controlling-and-displaying system for displaying an image based on information transferred from the information-processing system, and an information-creating system for storing information contents displayed on the information-controlling-and-displaying system together with their time information to create electronic information contents to each other through communication means;
setting control information corresponding to the information-creating system by using the input operation function of said information-processing system; and
storing the set control information with the time information in the information-creating system.

13. The information-processing method according to claim 12, wherein if said displayed information contents are streaming data and said control information is mark information, the mark information is set to the streaming data by specifying a marker previously in storing and the streaming data is reproduced by drifting into a marker position previously specified on the basis of the mark information in reproducing.

14. The information-processing method according to claim 12, wherein reproducing order is previously set for every unit of marker if reproducing the streaming data using the marker.

15. The information-processing method according to claim 14, wherein the reproducing order of the streaming data is replaced.

16. The information-processing method according to claim 14, wherein the streaming data is reproduced with an unnecessary part thereof being deleted.

17. The information-processing method according to claim 14, wherein by setting the reproducing order of the streaming data at random, the streaming data is reproduced at random by a marker unit.

18. The information-processing method according to claim 14, wherein said marker is manually set.

19. The information-processing method according to claim 14, wherein said marker is set every set period of time.

20. The information-processing method according to claim 12, wherein said information-creating system classifies the displayed information contents into arbitrary split information contents based on said control information.
